# EUROPÄISCHE PATENTANMELDUNG

(11) **EP 0 848 561 A2**
(43) Veröffentlichungstag der Anmeldung: **17.06.1998**
(21) Anmeldenummer: 97810880.1
(22) Anmeldetag: 19.11.1997
(51) Int. Cl.: H04Q 3/00, H04Q 11/04, H04L 29/06

(54) **Verfahren zum Übertragen von digitalisierten Nutzdaten und Signalisierungsdaten über einen Kanal**

(30) Priorität: 14.12.1996 DE 19652187
(71) Anmelder: Asea Brown Boveri AG, 5401 Baden (CH)
(72) Erfinder: Collaud, Yves, 5300 Turgi (CH); Luisier, Dominique, 5300 Turgi (CH)
(74) Vertreter: Weibel, Beat

(57) **Zusammenfassung**

Es wird ein Verfahren zur Übertragung von digitalisierten Nutzdaten und Signalisierungsdaten über einen gemeinsamen Kanal angegeben. Die Signalisierungsdaten werden mit den Nutzdaten mittels einer speziellen Kodierung multiplexiert. Zu diesem Zweck wird den Signalisierungsbytes mindestens ein Headerbyte vorangestellt, und die Umwandlung von Nutzdaten in einen dem Headerbyte entsprechenden Wert wird unterbunden. Dies geschieht dadurch, dass beim Auftritt eines dem Headerbyte entsprechenden Nutzdatenbytes mindestens ein Bit des Nutzdatenbytes invertiert wird.

## Beschreibung

### Technisches Gebiet

Die Erfindung bezieht sich auf das Gebiet der Nachrichtentechnik. Sie geht aus von einem Verfahren zum Übertragen von digitalisierten Nutzdaten und Signalisierungsdaten über einen Kanal gemäss dem Oberbegriff des ersten Anspruchs.

### Stand der Technik

In der Telefonie besteht das Problem, dass Nutzdaten, d.h. akustische Signale, insbesondere Sprachsignale, und Signalisierungsdaten, wie Informationen über den Zustand des Hörers, digitale, über die Tastatur eingegebene Signale, Klingelsignale etc., über denselben Kanal bzw. dasselbe Informationsübertragungsmedium übertragen werden müssen. Heutige Telefoniesysteme verwenden einen pulscodemodulierten (PCM) Kanal, d.h. alle Daten werden digital übertragen. Ein solches PCM-Übertragungsverfahren ist beispielsweise im Lehrbuch "Traité d'Electricité", Band XVIII "Systemes de Télécommunications" von Pierre-Gérard Fontolliet, herausgegeben von der Ecole Polytechnique Fédéral de Lausanne, beschrieben. Aufgrund des einzigen zur Verfügung stehenden Übertragungsmediums müssen somit Nutzdaten und Signalisierungsdaten, die ausserdem zur selben Zeit auftreten können, über dasselbe Medium übertragen werden.

Zur Übertragung von Telefonie-Signalisierungsdaten über einen Standard-PCM-Kanal herrschen heute zwei standardisierte Möglichkeiten vor: Beim europäischen PCM-Grundsystem (ITU-T G.732) werden die Signalisierungsdaten von 30 Telefoniekanälen auf Time Slot 16 multiplexiert (Ausserbandsignalisierung). Dieses Verfahren ist unter dem Namen "Channel Associated Signalling" (CAS) bekannt. Nach dem amerikanischen PCM-Grundsystem ITU-T G.733) werden Signalisierungsdaten für 24 Telefoniekanäle mit der "Bit-Stealing" Methode auf alle 24 Kanäle verteilt. Beide oben beschriebenen Verfahren sind jedoch nur für Mehrkanalsystem anwendbar. Es wäre wünschenswert, Signalisierungsdaten und Nutzdaten mit möglichst wenig Verzerrung und Bandbreiteneinbusse auch über einen beliebigen Einzelkanal übertragen zu können.

### Darstellung der Erfindung

Aufgabe der vorliegenden Erfindung ist es, ein Verfahren zum Übertragen von digitalisierten Nutzdaten und Signalisierungsdaten über einen Kanal anzugeben, bei welchem die Nutzdaten und Signalisierungsdaten über denselben Kanal mit möglichst wenig Verzerrung übertragen werden können. Diese Aufgabe wird bei einem Verfahren der eingangs genannten Art durch die Merkmale des ersten Anspruchs gelöst.

Kern der Erfindung ist es also, dass die Signalisierungsdaten mit den Nutzdaten mittels einer speziellen Kodierung multiplexiert werden. Zu diesem Zweck wird den Signalisierungsbytes mindestens ein Headerbyte vorangestellt, und die Umwandlung von Nutzdaten in einen dem Headerbyte entsprechenden Wert wird unterbunden. Dies geschieht dadurch, dass beim Auftritt eines dem Headerbyte entsprechenden Nutzdatenbytes mindestens ein Bit des Nutzdatenbytes invertiert wird. Dadurch handelt man sich zwar eine gewisse Verzerrung ein, diese kann jedoch dadurch minimiert werden, dass das LSB des Nutzdatenbytes invertiert wird.

Eine weitere Minimierung der Verzerrung erreicht man dadurch, dass zwei Headerbytes hintereinander übertragen werden. Damit es möglichst selten vorkommt, dass die Kombination der beiden Headerbytes als Nutzdatenbytes auftritt, werden Headerbytes gewählt, die dem Maximalwert der Nutzdaten entsprechen und sich lediglich durch das Vorzeichenbit unterscheiden. Im Empfänger wird beim Empfang jedes Headerbytes das zuletzt empfangene Nutzdatenbyte wiederholt.

Weitere Ausführungsbeispiele ergeben sich aus den entsprechenden abhängigen Ansprüchen.

Der Vorteil des erfindungsgemässen Verfahrens liegt insbesondere darin, dass es möglich ist, Signalisierungsdaten und Nutzdaten mit geringer Verzerrung über einen gemeinsamen Kanal zu übertragen. Dies ermöglicht eine bessere Ausnützung bestehender Kanalkapazitäten.

### Kurze Beschreibung der Zeichnungen

Nachfolgend wird die Erfindung anhand von Ausführungsbeispielen im Zusammenhang mit den Zeichnungen näher erläutert.

Es zeigen:
- **Fig. 1**: Ein Blockschema eines Übertragungssystems, für das das erfindungsgemässe Verfahren geeignet ist;
- **Fig. 2**: Weitere Details von Sender und Empfänger eines Übertragungssystems, für das das erfindungsgemässe Verfahren geeignet ist.

Die in den Zeichnungen verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen.

### Wege zur Ausführung der Erfindung

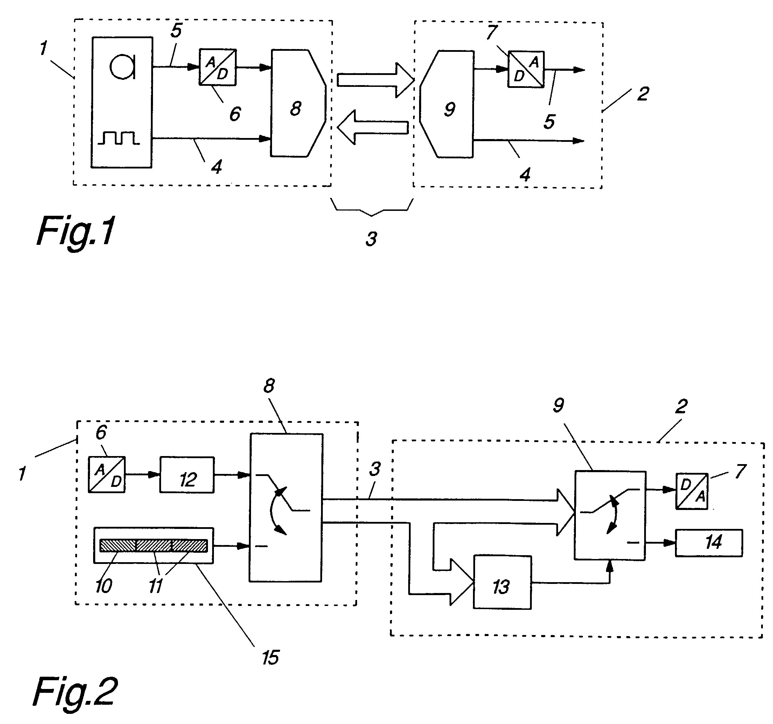

Figur 1 zeigt ein Blockschema eines Übertragungssystems, für das das erfindungsgemässe Verfahren geeignet ist. Bei einem solchen System werden zwischen einem Sender 1 und einem Empfänger 2 sowohl Nutzdaten 5 als auch Signalisierungsdaten 4 über einen Kanal 3 übertragen. Die Daten können beispielsweise von einem Telefon stammen. In diesem Fall werden die Nutz- oder Sprachdaten z.B. von einem Mikrofon aufgenommen und in einem A/D-Wandler 6 digitalisiert. Bei den Signalisierungsdaten, die bei modernen Telefonen bereits in digitalisierter Form vorliegen, kann es sich beispielsweise um Positionsdaten des Telefonhörers (aufgelegt oder nicht), Tastatureingaben, Klingelzeichen oder ähnliches handeln. Als Kanal wird insbesondere ein pulscodemodulierter Kanal verwendet.

Sowohl Nutzdaten wie Signalisierungsdaten sollen über denselben Kanal übermittelt werden. Zu diesem Zweck ist im Sender 1 ein Multiplexer 8 und im Empfänger 2 ein Demultiplexer 9 vorgesehen, der die beiden Datenarten auf den Kanal 3 gibt bzw. dem Kanal entnimmt. Treten gleichzeitig zur Übertragung von Nutzdaten Signalisierungsdaten auf, so ergibt sich das Problem, auf welche Weise sichergestellt werden kann, dass der Empfänger die detektierten Daten nicht als Nutzdaten interpretiert, sondern als Signalisierungsdaten. Zu diesem Zweck wird beim Auftreten von Signalisierungsdaten ein reserviertes Headerbyte erzeugt und den Signalisierungsdaten bei der Übertragung vorangestellt. Auf diese Weise wird im Empfänger bei der Detektion des Headerbytes sichergestellt, dass das nachfolgende Byte als Signalisierungsbyte interpretiert wird. Es kann nun jedoch vorkommen, dass im Rahmen der Nutzdaten ein dem Headerbyte entsprechendes Nutzdatenbyte auftritt. Damit dieses nicht als Headerbyte interpretiert wird, wird mindestens ein Bit des entsprechenden Nutzdatenbytes vor der Übertragung invertiert. Am wenigsten Verzerrung erhält man in diesem Fall natürlich dadurch, dass das LSB des Nutzdatenbytes invertiert wird. Somit treffen im Empfänger nur dem Headerbyte entsprechende Bytes ein, wenn es sich wirklich um ein solches handelt.

Da dieser Fall vergleichsweise häufig auftreten kann, wird ein noch besseres Verzerrungsverhalten erreicht, wenn zwei Headerbytes hintereinander gesendet werden. Insbesondere die Kombination von zwei Bytes, die einem maximalen Wert der Nutzdaten entsprechen und sich nur im Vorzeichen unterscheiden, tritt eher selten auf. Verwendet man diese Kombination als Headerbytes, so kann die dadurch erzeugte Verzerrung noch weiter minimiert werden.

Um bei der Detektion der Nutzdaten im Empfänger beim Empfang der Headerbytes keinen Unterbruch zu erzeugen, wird bei der Detektion jedes Headerbytes der zuletzt empfangene Nutzdatenwert einmal wiederholt. Dadurch kann der Strom der Nutzdaten mit geringer Verzerrung aufrecht erhalten werden.

Die Signalisierungsdaten umfassen nicht unbedingt ein gesamtes Byte, sondern nur einige wenige Bits. Diese Tatsache kann ausgenützt werden, indem in einem Signalisierungsbyte die höher wertigen Bits mit gleichzeitig anstehenden Nutzdaten besetzt werden. Im realisierten Ausführungsbeispiel wurden für die Signalisierungsdaten lediglich fünf Bits benötigt. Die übrigen drei Bits standen für Nutzdaten zur Verfügung. Die fünf niedrigst wertigen Bits wurde somit mit den Signalisierungsdaten besetzt, während die drei übrigen Bits für die Nutzdaten verwendet wurden. Dadurch konnte die durch die Übertragung der Signalisierungsdaten erzeugte Verzerrung noch weiter verringert werden.

In Figur 2 sind Sender 1 und Empfänger 2 detaillierter dargestellt. Beim Sender handelt es sich beispielsweise um ein Telefon, der Empfänger kann beispielsweise ein Telefonienetzwerk oder eine Telefonzentrale darstellen. Im Sender 1 ist ein A/D-Wandler 6 vorgesehen, der die Nutzdaten 5, sofern sie nicht bereits in digitalisierter Form bereitstehen, digitalisiert und einem Anti-Header-Pattern-Filter 12 zuführt. In diesem Filter wird sichergestellt, dass beim Auftreten eines dem Headerbyte entsprechenden Datenbytes mindestens ein Bit invertiert wird. Im Headerbyteerzeuger 15 werden die Headerbytes 11 beim Auftritt der Signalisierungsdaten erzeugt und dem entsprechenden Signalisierungsbyte 10 vorangestellt. Hier wird auch das Signalisierungsbyte erzeugt, d.h. ein Byte, das wie beschrieben mit Nutzdaten und mit Signalisierungsdaten gefüllt wird. Ein Multiplexer 8 schickt je nachdem, ob Signalisierungsdaten, d.h. Headerbytes anstehen oder nicht, diese auf den Kanal 3 oder die Nutzdaten.

Im Empfänger ist ein Header-Pattern-Detektor 13 vorgesehen, der bei der Detektion eines Headerbytes dafür sorgt, dass der Demultiplexer 9 die empfangenen Signalisierungsdaten einem Signalisierungsdatenbuffer 14 weiterleitet und nicht dem für die Nutzdaten vorgesehen D/A-Wandler 7. Ausserdem sorgt der Headerpattern-Detektor dafür, dass bei der Detektion jedes Headerbytes das zuletzt empfangene Datenbyte wiederholt wird.

Die Erfindung ermöglicht also eine mit sehr geringen Verzerrungen behaftete Übertragung von Signalisierungsdaten und Nutzdaten über einen gemeinsamen Kanal. Selbstverständlich ist die dargestellte Erfindung nicht auf die Telefonie beschränkt, sondern kann bei allen Übertragungssystemen mit Vorteil angewendet werden, bei denen sporadisch auftretende Signalisierungs- oder andere Daten über denselben Kanal übertragen werden müssen wie dauernd zu übertragene Nutzdaten.

### Bezugszeichenliste

- 1: Sender
- 2: Empfänger
- 3: Kanal
- 4: Signalisierungsdaten
- 5: Nutzdaten
- 6: A/D-Wandler
- 7: D/A-Wandler
- 8: Multiplexer
- 9: Demultiplexer
- 10: Signalisierungsdatenbyte
- 11: Headerbyte
- 12: Anti-Header-Pattern-Filter
- 13: Header-Pattern-Detektor
- 14: Signalisierungsdatenbuffer
- 15: Headerbyteerzeuger

## Patentansprüche

1. Verfahren zum Übertragen von digitalisierten Nutzdaten (5) und Signalisierungsdaten (4) über einen Kanal (3) von einem Sender (1) zu einem Empfänger (2), dadurch gekennzeichnet, dass im Sender (1) beim Auftritt von Signalisierungsdaten (4) zunächst mindestens ein bestimmtes Headerbyte (11) und anschliessend die Signalisierungsdaten übertragen (4) werden und dass beim Auftritt eines dem Headerbyte (11) entsprechenden Nutzdatenbytes mindestens ein Bit des Nutzdatenbytes invertiert wird.

2. Verfahren nach Anspruch 1, dadurch gekennzeichnet, dass beim Auftritt eines dem Headerbyte (11) entsprechenden Nutzdatenbytes, das LSB des Nutzdatenbytes invertiert wird.

3. Verfahren nach Anspruch 1 oder 2, dadurch gekennzeichnet, dass zwei Headerbytes hintereinander übertragen werden.

4. Verfahren nach Anspruch 3, dadurch gekennzeichnet, dass die beiden Headerbytes einem maximal möglichen Wert der Nutzdaten entsprechen und sich lediglich in dem einem Vorzeichen entsprechenden Bit unterscheiden.

5. Verfahren nach Anspruch 3 oder 4, dadurch gekennzeichnet, dass beim Auftritt von zwei Nutzdatenbytes, die den zwei hintereinander übertragenen Headerbytes entsprechen, lediglich das LSB des zweiten Nutzdatenbytes invertiert wird.

6. Verfahren nach einem der Ansprüche 1 bis 5, dadurch gekennzeichnet, dass bei einer Detektion jedes Headerbytes im Empfänger das zuletzt empfangene Nutzdatenbyte wiederholt wird.

7. Verfahren nach einem der vorstehenden Ansprüche, dadurch gekennzeichnet, dass bei der Bildung eines die Signalisierungsdaten enthaltenden Signalisierungsbytes die niedriger wertigen Bits mit den Signalisierungsdaten belegt werden, während die höher wertigen Bits mit entsprechenden Bruchteilen der anstehenden Nutzdaten belegt werden.

8. Verfahren nach Anspruch 7, dadurch gekennzeichnet, dass die fünf niedrigst wertigen Bits mit den Signalisierungsdaten belegt werden, während die drei höchst wertigen Bits mit entsprechenden Bruchteilen der Nutzdaten belegt werden.
